Europäisches Patentamt

**European Patent Office**

**Office européen des brevets**

(19)

(11) Veröffentlichungsnummer: **0 036 906**

**A1**

(12) # EUROPÄISCHE PATENTANMELDUNG

(21) Anmeldenummer: **80107302.4**

(22) Anmeldetag: **24.11.80**

(51) Int. Cl.³: **H 01 B 7/22**
**H 01 B 9/02**

(30) Priorität: **27.03.80 DE 3011868**

(43) Veröffentlichungstag der Anmeldung:
**07.10.81 Patentblatt 81/40**

(84) Benannte Vertragsstaaten:
**AT BE CH FR IT LI NL SE**

(71) Anmelder: **Kabel- und Metallwerke**
**Gutehoffnungshütte Aktiengesellschaft**
**Kabelkamp 20 Postfach 260**
**D-3000 Hannover 1(DE)**

(72) Erfinder: **Gerth, Dieter, Dr.-Ing.**
**Robert-Koch-Strasse 14**
**D-3012 Langenhagen(DE)**

(72) Erfinder: **Schatz, Friedrich, Ing. grad.**
**Weserweg 16**
**D-3012 Langenhagen(DE)**

(72) Erfinder: **van Hove, Cornelius, Dipl.-Ing.**
**Hoher Kamp 30**
**D-3012 Langenhagen(DE)**

(74) Vertreter: **Mende, Eberhard, Dipl.-Ing. et al,**
**Kabel- und Metallwerke Gutehoffnungshütte AG**
**Kabelkamp 20 Postfach 260**
**D-3000 Hannover 1(DE)**

(54) **Feuchtigkeitsgeschütztes elektrisches Energiekabel.**

(57) Kunststoffisoliertes elektrisches Kabel, das durch eine metallische gewellte Hülle gegen Feuchtigkeitseinwirkung geschützt ist. Die metallische Hülle besteht aus einem Doppelwellmanten (9) aus zwei nacheinander verschweißten, jedoch gemeinsam gewellten Metallbändern, wobei das innere (10) aus einem hochleitfähigen und das äußere (11) aus einem mechanisch widerstandsfähigen Material besteht.

**EP 0 036 906 A1**

COMPLETE DOCUMENT

Kabel- und Metallwerke
Gutehoffnungshütte Aktiengesellschaft

26. März 1980

1-1743

## Feuchtigkeitsgeschütztes elektrisches Energiekabel

Die vorliegende Erfindung betrifft ein feuchtigkeitsgeschütztes kunststoffisoliertes elektrisches Energiekabel, insbesondere Dreileiter-Kabel,
mit einer über der Kabelseele angeordneten metallischen gewellten Hülle.

Elektrische Energiekabel, die für Mittel- oder Hochspannungsbetrieb ausgelegt sind, weisen in der Regel einen metallischen Schirm in ihrem Schichtenaufbau auf, welcher auf der über der Kunststoffisolierung angeordneten
äußeren Leitschicht angebracht ist und z. B. aus aufgelegten Drähten oder
Metallbändern, vorzugsweise aus Kupfer, besteht. Dieser metallische Schirm,
der an sich aus elektrischen Gründen vorgesehen ist, kann aber auch, wie
bereits bekannt (DOS 15 40 430), gleichzeitig zur feuchtigkeitsdichten
Hülle für die darunter befindliche Isolierung verwendet werden. Hierbei
besteht die metallische Hülle aus einem längseinlaufenden, um die Kunststoffisolierung des Leiters herumgefalteten Metallband, vorzugsweise aus
Kupfer, dessen Kanten einander überlappen und im Bereich der Überlappungsstelle miteinander verlötet sind.

Bei dieser bekannten Möglichkeit eines feuchtigkeitsdichten Abschlusses ergeben sich jedoch Schwierigkeiten dadurch, daß sich bei Belastung des Kabels die Isolierung wesentlich stärker als die im Schichtenaufbau verwendete Metallage ausdehnt, so daß, wenn die Dehnbarkeit der an sich dichten metallischen Hülle ihre Grenzen erreicht, mit einem Aufplatzen zumindest der Schweiß- oder Lötstellen gerechnet werden muß. Hinzukommt, daß durch das längseinlaufend aufgebrachte Metallband die geforderte Biegbarkeit solcher Kunststoffkabel beeinträchtigt wird, was sich insbesondere beim Auf- und Abtrommeln bzw. bei der Verlegung störend bemerkbar macht.

Vorgeschlagen sind deshalb auch bereits zur Vermeidung dieser Schwierigkeiten kunststoffisolierte elektrische Energiekabel mit einer über der äußeren Leitschicht angeordneten wasserdichten Hülle aus einem gewellten Metallmantel (DOS 28 08 214). Diese gleichzeitig zur Abschirmung dienende Hülle besteht in der Regel aus einem elektrisch gut leitenden Material, wie beispielsweise Kupfer oder Aluminium.

Werden an solche Kabel besondere Anforderungen hinsichtlich der mechanischen Festigkeit gestellt, sei es, daß die spezielle Verlegung dies erfordert, sei es, daß die Kabel an Orten hoher mechanischer Beanspruchung zum Einsatz kommen, wie z. B. im Untertagebau oder bei der Verlegung in oder durch Flüsse oder Seen, dann werden in der Regel zusätzliche Armierungen verlangt.

Ausgehend von diesem bekannten Stand der Technik liegt der Erfindung deshalb die Aufgabe zugrunde, ein Kabel zu schaffen, dessen wasserdichte äußere Hülle sowohl den elektrischen (Abschirmung) als auch den mechanischen (äußerer Schutz) Anforderungen genügt.

Diese Aufgabe wird gemäß der Erfindung dadurch gelöst, daß die metallische Hülle aus einem Doppelwellmantel in Form zweier jeweils getrennt zum Rohr geformter und an den Kanten verschweißter, jedoch gemeinsam gewellter Metallbänder dünner Wandstärke besteht, wobei das innere der so geformten, im Bereich der Wellenberge und Wellentäler ineinandergreifenden Rohre aus einem elektrisch hochleitfähigen und das äußere aus einem mechanisch widerstandsfähigen Material besteht. Der elektrisch gut leitende Teil der Hülle z. B. aus Kupfer oder Aluminium, übernimmt die elektrische Längsleitung (Schirmung), während der z. B. aus Stahl hergestellte äußere Teil die mechanische Stabilität und den Schutz der Seele gegen äußere Einflüsse übernimmt. Der leitende Anteil der Hülle kann auf das elektrische Mindestmaß beschränkt bleiben, da die mechanischen Anforderungen von dem "nichtleitenden" Anteil erfüllt werden.

Bekannt ist zwar bereits (DOS 23 45 432) auch eine geschirmte Koaxialleitung mit einer den Außenleiter umgebenden Eisenhülle, bei der um den Außenleiter ein längseinlaufendes Eisenband zum Rohr geformt, verschweißt und gemeinsam mit dem Außenleiter gewellt wird, abweichend von der Erfindung handelt es sich hierbei jedoch nicht um den Feuchtigkeitsschutz eines kunststoffisolierten Energiekabels. Die Aufgabe, die der bekannten Anordnung zugrunde liegt, besteht vielmehr darin, eine Abschirmung der Leitung gegen äußere elektrische Einflüsse (Eisenhülle) zu finden, wobei der Außenleiter unmittelbar abgeschirmt wird.

Wie bereits erwähnt, läßt die Erfindung durch Wahl der Wandstärken der Einzelhüllen eine kostensparende Anpassung an die jeweiligen Verwendungszwecke zu. Als besonders vorteilhaft hat es sich in diesem Zusammenhang erwiesen, die Wandstärken der zu Rohre geformten, verschweißten und gewellten Bänder in der Größenordnung von 0,2 - 1,2 mm, vorzugsweise von 0,4 - 0,8 mm, zu wählen.

Energiekabel im Sinne der Erfindung können Niederspannungsverteilerkabel sein, besonders angestrebt wird ein Schutz gegen Feuchtigkeit jedoch vor allem bei solchen Energiekabeln, die mit höherer Spannung, also Mittel- oder Hochspannung, betrieben werden. Die letztgenannten Kabel können dabei als Ein- oder Mehrleiterkabel ausgebildet sein. Dient der elektrisch hochleitfähige Teil gleichzeitig zur Kabelabschirmung, dann ist eine elektrisch leitfähige Verbindung zur Isolierstoffoberfläche der Kunststoffisolierung bzw. der darüber aufgebrachten äußeren Leitschicht sicherzustellen.

Ein solcher Fall ist z. B. ein elektrisches Mittelspannungskabel, dessen Seele aus drei miteinander verseilten Starkstromadern besteht, die von einem gemeinsamen Mantel (Innenmantel) umschlossen werden. Wird hierbei der Innenmantel aus einem leitfähigen Material z. B. mit gummielastischen Eigenschaften hergestellt, dann ist es von besonderem Vorteil, wenn die Wellentäler des inneren Rohres in das elastische Material eingreifen. Neben der für eine wirksame Abschirmung unerläßlichen elektrisch leitenden Verbindung zwischen Innenmantel und Hülle ergibt sich als weiterer Vorteil, insbesondere bei Kabeln mit einer Hülle mit parallel verlaufender Wellung, eine in Kabellängsrichtung erzielte Abdichtung oder Abschottung. Eine Abdichtung in Längsrichtung, kontinuierlich oder in Abständen, läßt sich selbstverständlich auch dadurch erreichen, daß z. B. bei nicht elastischem Material unter der gewellten Hülle oder bei wendelförmig verlaufenden Wellenbergen bzw. Wellentälern, die gebildeten Zwischenräume mit bei Feuchtigkeitseinwirkung quellenden Materialien, Schaumstoffen oder dichtenden Massen oder Pasten, etwa auf Kautschukbasis, gefüllt sind.

Die Erfindung sei an Hand des in der Fig. als Ausführungsbeispiel dargestellten Dreileiter-Energie-Kabels in Form eines sog. Mittelspannungskabels näher erläutert.

Die im Ausführungsbeispiel aus einer Vielzahl von miteinander verseilten Einzeldrähten bestehenden stromführenden Leiter 1 sind von der Isolierung 2, beispielsweise einem vernetzten Polyäthylen, umgeben, die innere Leitschicht ist mit 3 bezeichnet. Die Einzelleiter, von der äußeren Leitschicht 4 überdeckt, sind miteinander verseilt, sie können rund, wie dargestellt, aber auch oval oder sektorförmig ausgebildet sein. Die Zwickelräume sind mit der sog. Trense 5 bzw. den Zwickelfüllungen 6 in Form von Isolierstoffsträngen ausgefüllt. Zum Zusammenhalt dieser Seele dient zunächst eine Umspinnung aus leitfähigen Bändern 7, darüber ist der sog. Innenmantel 8 aus einer gummielastischen, hier leitfähigen Masse z. B. aufextrudiert. Zweckmäßig wird man hierfür Werkstoffe auf Basis natürlicher oder künstlicher Kautschuke verwenden, aber auch solche auf Basis thermoplastischer Kautschuke sind hierfür geeignet.

Über der so aufgebauten Kabelseele befindet sich die geschlossene metallische und hier parallel gewellte Hülle 9, bestehend aus einem inneren hochleitfähigen Teil 10 und einem mechanisch widerstandsfähigen äußeren Teil 11. Der Teil 10 steht in leitfähigem Kontakt mit dem Innenmantel 8. Dieser Doppelwellmantel 9 wird dadurch erzeugt, daß zunächst ein längseinlaufendes Kupferband, etwa mit einer Wandstärke von 0,3 - 0,5 mm, über dem Innenmantel 8 der Seele zum Rohr geformt und an den Kanten verschweißt wird, bevor darüber ein ebenfalls längseinlaufendes Stahlband von z. B. 0,5 - 0,7 mm Wandstärke ebenfalls zum Rohr geformt und an den Kanten verschweißt wird. Anschließend werden beide Rohre gemeinsam gewellt, so daß Wellenberge und Wellentäler ineinandergreifen.

In diesem Zusammenhang hat es sich in Weiterführung der Erfindung als besonders vorteilhaft erwiesen, wenn vor dem Wellvorgang das äußere Rohr auf das innere heruntergezogen wird. Durch das dichte Aufliegen des Außenrohres auf dem Innenrohr wird nämlich ein Drehen des Innenrohres im Außenrohr beim gemeinsamen Wellvorgang verhindert.

Über der äußeren Hülle kann ein Korrosionsschutz bekannter Art aufgebracht werden, darüber wiederum schließt sich in der Regel ein Kunststoffmantel 12, z. B. auf Basis Polyvinylchlorid, an.

Kabel- und Metallwerke
Gutehoffnungshütte Aktiengesellschaft

26. März 1980

1-1743

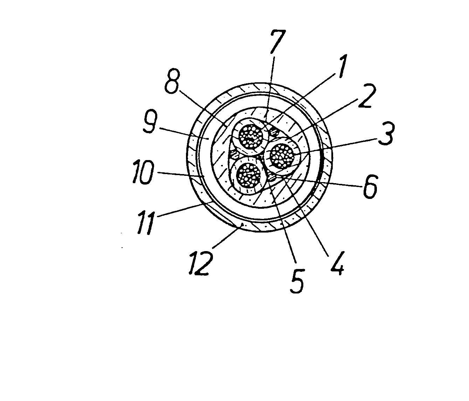

Patentansprüche

1. Feuchtigkeitsgeschütztes kunststoffisoliertes elektrisches Energiekabel, insbesondere Dreileiter-Kabel, mit einer über der Kabelseele angeordneten metallischen gewellten Hülle, dadurch gekennzeichnet, daß die metallische Hülle aus einem Doppelwellmantel in Form zweier jeweils getrennt zum Rohr geformter und an den Kanten verschweißter, jedoch gemeinsam gewellter Metallbänder dünner Wandstärke besteht, wobei das innere der so geformten, im Bereich der Wellenberge und Wellentäler ineinandergreifenden Rohre aus einem elektrisch hoch leitfähigen und das äußere aus einem mechanisch widerstandsfähigen Material besteht.

2. Kabel nach Anspruch 1, dadurch gekennzeichnet, daß für das innere gewellte Rohr Kupfer oder Aluminium und für das äußere Stahl verwendet ist.

3. Kabel nach Anspruch 1 oder 2, dadurch gekennzeichnet, daß die Wandstärken der zu Rohren geformten, verschweißten und gewellten Bänder 0,2 - 1,2 mm, vorzugsweise 0,4 - 0,8 mm, betragen.

4. Kabel nach Anspruch 1 oder einem der folgenden mit mehreren die Seele bildenden verseilten Adern und einem diese umgebenden gemeinsamen Innenmantel aus elastischem, vorzugsweise leitfähigem Material, dadurch gekennzeichnet, daß die Wellentäler des inneren Rohres in das elastische Material eingreifen.

5. Verfahren zur Herstellung eines Kabels nach Anspruch 1 oder einem der folgenden, dadurch gekennzeichnet, daß um die Kabelseele zunächst ein längseinlaufendes Metallband hoher elektrischer Leitfähigkeit zum Rohr geformt und an den Kanten verschweißt wird, daß anschließend darüber ein längseinlaufendes Metallband erhöhter mechanischer Festigkeit zum Rohr geformt und an den Kanten verschweißt wird und daß schließlich beide Rohre gemeinsam gewellt werden.

6. Verfahren nach Anspruch 5, dadurch gekennzeichnet, daß vor dem Wellvorgang das äußere Rohr auf das innere heruntergezogen wird.

Europäisches
Patentamt

**EUROPÄISCHER RECHERCHENBERICHT**

EP 80107302.4

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | |
| | DE - A1 - 2 331 757 (GUTE-HOFFNUNGSHÜTTE) & US-A-3 941 296 -- | | 1,3-6 | H 01 B 7/22 H 01 B 9/02 |
| D | DE - A1 - 2 345 432 (GUTE-HOFFNUNGSHÜTTE) & US-A-4 083 484 -- | | 1,2,5, 6 | |
| | US - A - 3 360 409 (JACHIMOWICZ) ---- | | 1,3,4 | |

**RECHERCHIERTE SACHGEBIETE (Int. Cl.³)**

H 01 B 7/00
H 01 B 9/00
H 01 B 11/00
H 01 B 13/00
B 21 C 37/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 25-05-1981 | KUTZELNIGG |

EPA form 1503.1    06.78